# FASCICULE DE BREVET EUROPEEN

(11) **EP 0 586 296 B1**
(45) Date de publication et mention de la délivrance du brevet: **24.02.1999**
(21) Numéro de dépôt: 93402125.4
(22) Date de dépôt: 31.08.1993
(51) Int. Cl.: B32B 17/10, C03C 27/12, B60J 1/00

(54) **Vitrage automobile antieffraction**
Einbruchsichere Fahrzeugverglasung
An anti-effraction car pane

(30) Priorité: 04.09.1992 DE 9211909 U
(43) Date de publication de la demande: 09.03.1994
(73) Titulaire: SAINT-GOBAIN VITRAGE, 92400 Courbevoie (FR); VEGLA Vereinigte Glaswerke GmbH, 52066 Aachen (DE)
(72) Inventeur: Hörner, Alfred, D-71263 Weil der Stadt (DE); Hassiepen, Karl Michael, Dr., D-52074 Aachen (DE)
(74) Mandataire: Muller, René

(56) Documents cités:
- EP-A- 0 478 405
- FR-A- 2 323 650
- FR-A- 2 534 244
- FR-A- 2 632 950
- GB-A- 2 190 877
- US-A- 3 458 388
- US-A- 4 124 733

## Description

La présente invention concerne un vitrage automobile antieffraction fait d'un verre de sécurité feuilleté et prévu, en particulier, pour les vitrages latéraux et de portières de véhicules.

Les vitrages latéraux et de portières de véhicules automobiles de même que les lunettes arrière sont, en règle générale, en verre qualifié de verre de sécurité trempé. Le verre de sécurité trempé est un verre monolithique qui a subi une trempe thermique et qui, en cas de destruction, se divise en un grand nombre de petits fragments et libère la baie de fenêtre. Suite au nombre croissant de vols de voitures et d'effractions dans les voitures, des vitrages automobiles possédant des propriétés antieffraction soulèvent un intérêt considérable.

A titre de vitrages antieffraction, il convient en tout premier lieu de citer les vitrages feuilletés. Les vitrages feuilletés doivent satisfaire à une série de conditions pour obtenir l'homologation autorisant leur montage dans des voitures. Les conditions indispensables figurent dans la norme ECE connue R 43. Conformément à cette norme, les vitrages feuilletés doivent céder lors de l'essai dit au mannequin et doivent se briser en formant de nombreuses fentes disposées en cercle et à peu près centrées sur le point d'impact de la tête du mannequin, mais la tête du mannequin ne peut pas traverser le vitrage et de plus grands fragments de verre ne peuvent pas se détacher de la pellicule. Cela signifie que même des vitrages antieffraction doivent se briser et céder lors du test normalisé au mannequin. Par ailleurs, selon une hypothèse essentielle pour un vitrage résistant aux effractions, il faut que, lors d'un essai d'effraction, le vitrage résiste le plus longtemps possible et ne libère pas la baie de fenêtre. Ces conditions contradictoires imposent les limites relativement étroites à la structure de tels vitrages feuilletés.

On connaît un vitrage automobile à résistance accrue aux effractions dans lequel une couche du vitrage feuilleté est constituée d'un polycarbonate résistant aux chocs (document DE 39 19 290 A1). Ce vitrage automobile connu est constitué d'une feuille de verre individuelle de 3 mm d'épaisseur trempée par voie thermique, d'une feuille de polycarbonate de 2 mm d'épaisseur et d'une feuille de verre de 1,2 mm trempée par voie chimique, ces couches étant unies l'une à l'autre au moyen de couches adhésives de polyuréthanne de 1,2 mm d'épaisseur chacune. Ce vitrage antieffraction connu ne satisfait plus aux conditions de la norme ECE R 43.

Un autre vitrage automobile connu en verre feuilleté est constitué d'une feuille de verre trempée de 3 à 4 mm d'épaisseur et d'une feuille de verre non trempée ou faiblement trempée de 1,5 à 2,5 mm d'épaisseur qui sont unies par l'intermédiaire d'une couche thermoplastique de polyuréthanne de 0,8 à 2,0 mm d'épaisseur (document EP 0 418 123 A1). Ce vitrage feuilleté connu qui est prévu, en particulier, comme vitrage de portière réglable en hauteur, comporte une feuille de verre trempée par voie thermique qui est orientée vers l'extérieur, dont les dimensions sont plus grandes que celles des autres couches, et dont le domaine marginal qui dépasse des autres couches sert au maintien et au guidage du vitrage feuilleté dans les glissières de guidage du cadre de fenêtre. Un vitrage automobile présentant une telle structure ne satisfait pas non plus aux conditions imposées par ladite norme ECE . De plus, la résistance à l'effraction qui peut ainsi être obtenue est insuffisante parce que la couche intermédiaire de polyuréthanne, après destruction de la feuille de verre extérieure, peut être découpée par un outil coupant enfoncé entre les fragments de verre. De plus, un vitrage feuilleté dans lequel seul le bord dépassant d'une feuille de verre trempée par voie thermique est retenu dans le cadre de fenêtre, peut être facilement enfoncée dans sa totalité lorsque l'on détruit la feuille de verre trempée. Dans le cas du vitrage feuilleté connu dans lequel la feuille de verre trempée forme la feuille de verre externe, cette possibilité est particulièrement marquée.

US-A-3 458 388 décrit un vitrage feuilleté constitué de deux feuilles externes de verre collées à une feuille d'âme rigide en polycarbonate de 1,524 mm d'épaisseur, par l'intermédiaire de deux couches adhésives de polyuréthanne de 0,508 mm d'épaisseur.

FR-A-2 534 244 divulgue un panneau anti-effraction constitué de deux feuilles de verre de 3 mm d'épaisseur solidarisées à une feuille d'âme de polycarbonate de 2 mm d'épaisseur par deux couches de polyuréthanne de 0,5 mm.

EP-A-0 478 405 décrit un vitrage automobile de type feuilleté dans lequel des feuilles de verre individuelles de 1,5 à 3,5 mm d'épaisseur ont subi une trempe thermique inférieure à celle d'une vitre de sécurité trempée et différenciée sur sa surface de telle sorte que, dans toute la zone marginale du pourtour d'une feuille, la contrainte de traction à coeur moyenne est inférieure de 5 à 15 % à celle qui est nécessaire pour obtenir une ténacité à la fracture conforme aux normes et que, dans la zone de la surface du verre qui se trouve à l'intérieur de cette zone marginale, la contrainte de traction à coeur est inférieure de 20 à 40 % à celle qui est nécessaire pour obtenir une ténacité à la fracture conforme aux normes.

L'invention a pour but de procurer un vitrage automobile en verre feuilleté qui, d'une part, présente une haute résistance aux effractions et, d'autre part, satisfasse néanmoins aux conditions de la norme ECE R43.

Le vitrage automobile conforme à l'invention est défini aux revendications 1 et 3. Il est essentiellement caractérisé en ce qu'il comporte une feuille d'âme de 0,5 à 1,0 mm en polycarbonate et des feuilles externes en verre silicaté, trempées, qui sont unies à la feuille d'âme en polycarbonate par l'intermédiaire d'une couche polyuréthanne thermoplastique de 0,3 à 1,0 mm d'épaisseur.

Ce vitrage présente une épaisseur relativement faible, de sorte qu'avec des cadres de fenêtre traditionnels, il peut également être utilisé comme vitrage de portière descendant.

Selon une première forme de réalisation, les feuilles de verre silicaté ont chacune une épaisseur de 1,5 à 2,5 mm et sont trempées à des températures élevées par voie chimique par échange d'ions dans un bain de sel. Les feuilles de verre silicaté trempées par voie chimique présentent, dans leur couche superficielle, une tension initiale de compression comprise entre 300 et 500 N par mm², en particulier, entre 300 et 400 N par mm².

De préférence, les feuilles de verre ont chacune une épaisseur d'environ 2 mm, la feuille d'âme en polycarbonate a une épaisseur d'environ 1,0 mm et les couches de jonctions en polyuréthane thermoplastique ont chacune une épaisseur d'environ 0,76 mm.

Une autre forme de réalisation du vitrage automobile conforme à l'invention est caractérisée en ce que les feuilles de verre silicaté ont une épaisseur de 2 à 3 mm et sont trempées par voie thermique, c'est-à-dire par un refroidissement accéléré des feuilles de verre chauffées à la température de trempe, mais elles présentent une trempe plus faible que celle du verre de sécurité trempé, de telle sorte que les tensions de traction à coeur dans les feuilles de verre sont de 35 à 55 N par mm².

Dans le cas d'un vitrage feuilleté de ce type, la trempe des feuilles de verre silicaté doit de préférence être différenciée sur la surface de la feuille de verre, de telle sorte que dans le domaine marginal, tout autour de celui-ci, la tension de traction moyenne à coeur dans les feuilles de verre est supérieure d'environ 10 à 20 % à celle qui règne dans le champ central.

De préférence, la tension de traction moyenne à coeur des feuilles de verre dans le domaine marginal est de 40 à 55 N/mm² et, dans le champ central des feuilles de verre, la tension de traction moyenne à coeur des feuilles de verre est de 35 à 50 N/mm².

Selon une réalisation particulière de cette variante de l'invention, les feuilles de verre ont chacune une épaisseur de 2 à 2,5 mm, la feuille d'âme en polycarbonate a une épaisseur d'environ 1 mm et les couches de jonction en polyuréthane thermoplastique ont chacune une épaisseur d'environ 0,76 mm.

Pour augmenter l'adhérence des couches adhésives aux surfaces du verre, une couche d'accrochage contenant un silane est appliquée sur les feuilles de verre silicaté trempé du côté adjacent à la couche de polyuréthane.

Tout en respectant les limites conformes à l'invention pour les épaisseurs des feuilles de verre et des couches intermédiaires et pour le degré de trempe, d'une part, on obtient la résistance aux effractions souhaitée dans une mesure particulièrement élevée et, d'autre part, on satisfait à la condition imposée par la norme ECE R 43 selon laquelle les vitrages feuilletés doivent céder et se fragmenter dans la mesure exigée lors de l'essai au mannequin. En particulier, dans le cas de l'utilisation de vitrages trempés par voie thermique et présentant ladite trempe différenciée dans le champ central et dans le domaine marginal, il est acquis que, grâce à la trempe plus faible dans le champ central, on atteint la flexibilité exigée lors de l'essai au mannequin, alors qu'en revanche la trempe plus élevée dans la zone marginale confère en même temps au vitrage une solidité mécanique accrue, de sorte que le vitrage feuilleté résiste sans problème aux sollicitations mécaniques accrues dans le domaine marginal telles qu'elles se produisent, par exemple, dans le cas d'un vitrage de portière descendant.

Dans le cas de vitrages trempés par voie chimique, le procédé de fabrication exige que les couches superficielles extérieures des feuilles de verre qui sont soumises à des tensions de compression soient très minces, et que les tensions de compression dans les couches superficielles soient compensées par des tensions de traction relativement faibles dans le coeur des feuilles de verre.

En revanche, la courbe des tensions sur la totalité de la section transversale du verre dans le cas de feuilles de verre trempées par voie thermique est en substance parabolique, étant entendu que les tensions de traction dans le coeur du verre et les tensions de compression dans les surfaces se trouvent dans un rapport de leurs valeurs numériques absolues d'environ 1:2. Etant donné que les tensions de traction dans le coeur du verre se laissent mesurer avec plus de précision que les tensions de compression dans les couches superficielles, les tensions requises sont chaque fois des tensions à coeur dans le cas des feuilles de verre trempées par voie thermique.

Lors de l'utilisation de feuilles de verre trempées par voie thermique, la largeur de la zone marginale trempée plus fortement atteint au maximum environ 3 cm et est de préférence comprise entre 1 et 2 cm environ.

Les tensions de traction à coeur de la feuille de verre peuvent être mesurées au moyen du procédé à lumière diffusée et laser tel qu'il a été décrit dans la publication "XV INTERNATIONAL CONGRESS ON GLASS, Leningrad 1989 PROCEEDINGS, volume 3b, pages 217 à 220".

On peut créer la structure des tensions conforme à l'invention, lors d'une trempe avec de l'air soufflé par les dispositifs de trempe connus, en faisant varier les paramètres du procédé comme la pression d'air et la distance séparant les buses de soufflage de la feuille de verre ainsi que l'arrangement géométrique des caissons de soufflage conformément à l'image de fracture chaque fois obtenue, jusqu'à ce que les valeurs de tension souhaitées soient obtenues. Dans ce cas, par des mesures adéquates, on peut faire en sorte que l'évacuation de la chaleur dans le domaine marginal des feuilles de verre soit adéquatement supérieure à celle qui se produit dans le domaine de la surface du verre. Dans le cas d'un vitrage individuel fabriqué au moyen des paramètres de procédé déterminés, les tensions dans le champ central et dans le domaine marginal peuvent alors être mesurées par le procédé à lumière diffusée et laser et le réglage fin final des paramètres du procédé peut être effectué.

Deux exemples de réalisation de l'invention seront décrits ci-après plus en détail avec référence aux dessins annexés. Il s'agit dans ce cas d'un vitrage feuilleté légèrement bombé de manière cylindrique, qui doit être utilisé comme vitrage de portière descendant.

Aux dessins annexés :
la Fig. 1 est une vue en élévation de côté d'un vitrage de portière, et
la Fig. 2 est une vue fragmentaire, à plus grande échelle, illustrant une coupe.

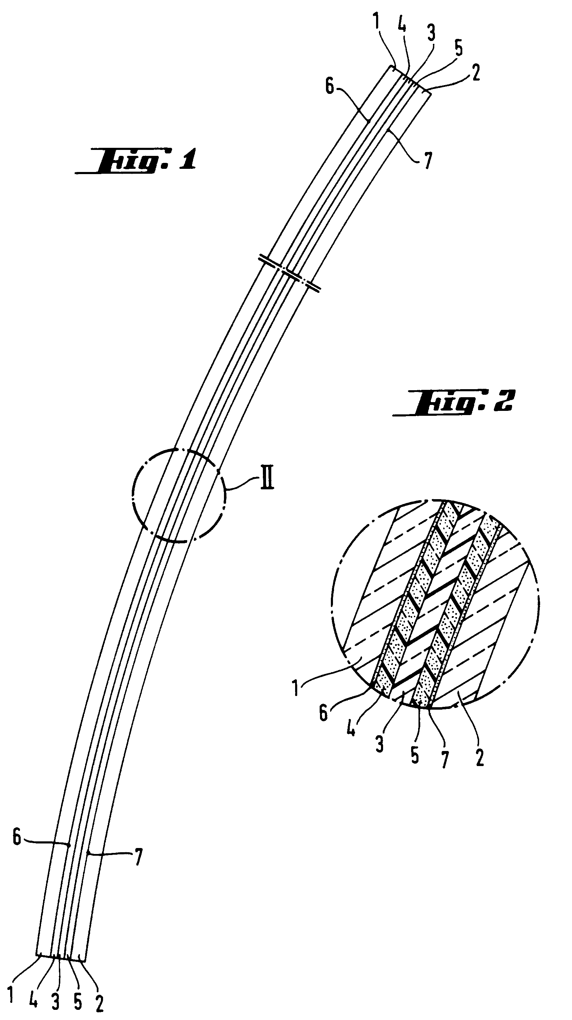

### EXEMPLE 1.-

Le vitrage feuilleté est constitué d'une feuille de verre silicaté bombée externe 1 en verre flotté de 1,8 mm d'épaisseur, qui, suite à un échange d'ions au cours d'un traitement de trempe chimique, présente sur l'ensemble de sa surface, dans les couches superficielles extérieures, une tension de compression d'environ 350 N par mm². L'autre côté de la feuille de verre feuilleté est formé par la feuille de verre flotté 2 présentant un bombé correspondant à celui de la feuille de verre flotté 1. Cette feuille de verre flotté 2 a une épaisseur également de 1,8 mm et présente, suite au même traitement de trempe chimique, également une tension de compression d'environ 350 N par mm² dans ses couches superficielles externes.

L'âme du vitrage feuilleté est formée par une pellicule 3 de 1 mm d'épaisseur en polycarbonate clair transparent. La pellicule de polycarbonate 3 est collée à demeure, via des couches adhésives de 0,76 mm d'épaisseur 4 et 5 en polyuréthanne thermoplastique, aux feuilles de verre flotté 1 et 2. Pour augmenter l'adhérence des couches adhésives 4 et 5 aux surfaces du verre, celles-ci sont revêtues de minces couches d'agent d'accrochage contenant un silane 6, 7.

Pour fabriquer un tel vitrage feuilleté, on procède d'une manière traditionnelle dans le domaine de la fabrication de vitrages feuilletés en bombant tout d'abord les deux feuilles de verre flotté par paire. Les deux feuilles de verre flotté bombées sont alors trempées individuellement par voie chimique par traitement dans une masse de sel fondu adéquate, à une température d'environ 450°C. Les feuilles de verre flotté trempées sont chacune enduites, du côté tourné vers la feuille d'âme, au moyen d'un agent d'accrochage contenant un silane. Les couches individuelles sont ensuite superposées et sont unies l'une à l'autre d'une manière connue par un apport de chaleur et de pression.

### EXEMPLE 2.-

La feuille de verre externe 1 et la feuille de verre interne 2 du vitrage feuilleté sont constituées chacune de feuilles de verre flotté de 2,5 mm d'épaisseur. Elles sont bombées individuellement au moyen d'une presse refroidie à l'eau, comme décrit dans le document EP 0 404 677 B1 et sont simultanément trempées. L'effet de refroidissement différencié exercé par les outils presseurs sur le domaine marginal et sur le champ central du vitrage est, dans ce cas, obtenu par un agencement correspondant des outils presseurs ou par la disposition et le dimensionnement des zones refroidies des outils presseurs.

Les feuilles de verre individuelles 1 et 2 ainsi bombées et trempées présentent la structure de tensions conforme à l'invention. Dans la zone marginale immédiate, dont la largeur s'élève environ à 3 mm, et dans la totalité de l'épaisseur de la feuille de verre individuelle, c'est-à-dire également dans le plan médian de celle-ci, règnent exclusivement des tensions de compression. Dans le domaine marginal périphérique qui est directement adjacent à cette zone marginale étroite et dont la largeur est d'environ 1,5 cm, les tensions de traction moyennes à coeur sont d'environ 40 à 55 N par mm² et dans le champ central, intérieurement par rapport au domaine marginal, les tensions de traction à coeur sont d'environ 35 à 50 N par mm².

Les deux feuilles de verre 1 et 2 présentant ladite structure de tensions sont unies de façon durable via deux couches adhésives 4 et 5, en polyuréthanne thermoplastique, de 0,76 mm d'épaisseur chacune à une feuille d'âme 3 de 0,75 mm d'épaisseur, en polycarbonate. Pour augmenter l'adhérence des couches adhésives 4 et 5 aux surfaces du verre, celles-ci sont revêtues d'une mince couche d'accrochage contenant un silane 6 ou 7.

La fabrication du vitrage en verre feuilleté s'effectue conformément à des procédés connus en superposant les couches individuelles et en les unissant l'une à l'autre au moyen d'un apport de chaleur et de pression.

Le vitrage feuilleté possède des propriétés étonnantes au plan biomécanique du point de vue de sa sécurité dans le trafic et en cas d'accident et du point de vue de ses possibilités de fabrication en série et il satisfait, en outre, à la norme ECE. De plus, il offre, en particulier, une efficacité antieffraction élevée et réussit les essais mécaniques traditionnels prévus pour des vitrages antieffraction.

## Revendications

1. Vitrage automobile antieffraction en verre de sécurité feuilleté, prévu, en particulier, pour les vitrages latéraux et les vitrages de portières, **caractérisé en ce qu'**il satisfait les conditions de la norme ECE R43, **en ce qu'**il comporte une feuille d'âme (3) de 0,5 à 1,0 mm d'épaisseur en polycarbonate et des feuilles externes (1, 2) en verre silicaté trempé par voie chimique de 1,5 à 2,5 mm d'épaisseur, qui sont unies à la feuille d'âme (3) en polycarbonate chaque fois via une couche (4, 5) de polyuréthanne thermoplastique de 0,3 à 1,0 mm d'épaisseur, et **en ce que** les feuilles de verre silicaté (1, 2) présentent, dans les domaines superficiels, une tension de compression de 300 à 500 N/mm² et de préférence de 300 à 400 N/mm².

2. Vitrage automobile suivant la revendication 1, **caractérisé en ce que** les feuilles de verre (1, 2) ont chacune une épaisseur d'environ 2 mm, la feuille d'âme (3) en polycarbonate a une épaisseur d'environ 1,0 mm et les couches de jonction (4, 5) en polyuréthanne thermoplastique ont chacune une épaisseur d'environ 0,76 mm.

3. Vitrage automobile antieffraction en verre de sécurité feuilleté, prévu, en particulier, pour les vitrages latéraux et les vitrages de portières, **caractérisé en ce qu'**il satisfait les conditions de la norme ECE R43, **en ce qu'**il comporte une feuille d'âme (3) de 0,5 à 1,0 mm d'épaisseur en polycarbonate et des feuilles externes (1, 2) en verre silicaté trempé par voie thermique de 2 à 3 mm d'épaisseur, qui sont unies à la feuille d'âme (3) en polycarbonate chaque fois via une couche (4, 5) de polyuréthanne thermoplastique de 0,3 à 1,0 mm d'épaisseur **et en ce que** les feuilles de verre silicaté (1, 2) présentent une trempe plus faible que celle du verre de sécurité trempé, de telle sorte que les tensions de traction à coeur des feuilles de verre s'élèvent à 35 à 55 N/mm².

4. Vitrage automobile suivant la revendication 3, **caractérisé en ce que** la trempe des feuilles de verre silicaté est différenciée sur la surface des feuilles, de telle sorte que dans le domaine marginal, tout autour de celui-ci, la tension de traction moyenne à coeur des feuilles de verre est de 40 à 55 N/mm² et, dans le champ central des feuilles de verre, la tension de traction moyenne à coeur des feuilles de verre est de 35 à 50 N/mm².

5. Vitrage automobile suivant la revendication 3 ou 4, **caractérisé en ce que** les feuilles de verre (1, 2) ont chacune une épaisseur de 2 à 2,5 mm, la feuille d'âme (3) en polycarbonate a une épaisseur d'environ 1 mm et les couches de jonction en polyuréthanne thermoplastique ont chacune une épaisseur d'environ 0,76 mm.

6. Vitrage automobile suivant l'une quelconque des revendications 1 à 5, **caractérisé en ce qu'**une couche d'accrochage contenant un silane (6, 7) est appliquée sur les feuilles de verre silicaté trempé (1, 2) du côté adjacent à la couche de polyuréthanne (4, 5).

## Claims

1. Anti-break-in car glazing made from laminated safety glass, designed in particular for side glazing and door glazing, characterised in that it meets the requirements of the standard ECE R43, in that it has a polycarbonate core sheet (3) with a thickness of 0.5 to 1.0 mm and outer sheets (1, 2) made from chemically toughened silica glass with a thickness of 1.5 to 2.5 mm, which are joined to the polycarbonate core sheet (3) each via a layer (4, 5) of thermoplastic polyurethane with a thickness of 0.3 to 1.0 mm, and in that the sheets of silica glass (1, 2) have, in the surface regions, a compression tension of 300 to 500 N/mm² and preferably 300 to 400 N/mm².

2. Car glazing according to Claim 1, characterised in that the glass sheets (1, 2) each have a thickness of approximately 2 mm, the polycarbonate core sheet (3) has a thickness of approximately 1.0 mm and the thermoplastic polyurethane joining layers (4, 5) each have a thickness of approximately 0.76 mm.

3. Anti-break-in car glazing made from laminated safety glass, designed in particular for side glazing and door glazing, characterised in that it meets the requirements of the standard ECE R43, in that it has a polycarbonate core sheet (3) with a thickness of 0.5 to 1.0 mm and outer sheets (1, 2) made from chemically toughened silica glass with a thickness of 2 to 3 mm, which are joined to the polycarbonate core sheet (3) each via a layer (4, 5) of thermoplastic polyurethane with a thickness of 0.3 to 1.0 mm, and in that the sheets of silica glass (1, 2) have lesser toughening than the toughened safety glass, so that the core traction tensions of the sheets of glass are from 35 to 55 N/mm².

4. Car window according to Claim 3, characterised in that the toughening of the sheets of silica glass is differentiated on the surface of the sheets, so that, in the marginal region, all around it, the mean core traction tension of the sheets of glass is 40 to 55 N/mm² and, in the central area of the sheets of glass, the mean core traction tension of the sheets of glass is 35 to 50 N/mm².

5. Car glazing according to Claim 3 or 4, characterised in that the glass sheets (1, 2) each have a thickness of approximately 2 to 2.5 mm, the polycarbonate core sheet (3) has a thickness of approximately 1 mm and the thermoplastic polyurethane joining layers (4, 5) each have a thickness of approximately 0.76 mm.

6. Car window according to any one of Claims 1 to 5, characterised in that an attachment layer containing a silane (6, 7) is applied to the sheets of toughened silica glass (1, 2) on the side adjacent to the layer of polyurethane (4, 5).

## Patentansprüche

1. Einbruchhemmende Autoglasscheibe aus Verbundsicherheitsglas, insbesondere für die Seiten- und Türverglasung, **dadurch gekennzeichnet**, daß sie die Bedingungen der Norm ECE R43 erfüllt, indem sie eine 0,5 bis 1 mm dicke Kernscheibe (3) aus Polycarbonat und Außenscheiben (1, 2) aus chemisch vorgespanntem, 1,5 bis 2,5 mm dicken Silikatglas aufweist, die mit der Kernscheibe (3) aus Polycarbonat über jeweils eine 0,3 bis 1,0 mm dicke Schicht (4, 5) aus thermoplastischem Polyurethan verbunden sind, und daß die Silikatglasscheiben (1, 2) an ihren Oberflächen eine Druckspannung von 300 bis 500 N / mm² und vorzugsweise von 300 bis 400 N / mm² aufweisen.

2. Autoglasscheibe nach Anspruch 1, **dadurch gekennzeichnet**, daß die chemisch vorgespannten Silikatglasscheiben (1, 2) eine Dicke von etwa 2 mm, die Kernscheibe (3) aus Polycarbonat eine Dicke von etwa 1,0 mm, und die Verbindeschichten (4, 5) aus thermoplastischem Polyurethan jeweils eine Dicke von etwa 0,76 mm aufweisen.

3. Einbruchhemmende Autoglasscheibe aus Verbundsicherheitsglas, insbesondere für die Seiten- und Türverglasung, **dadurch gekennzeichnet**, daß sie die Bedingungen der Norm ECE R43 erfüllt, indem sie eine 0,5 bis 1 mm dicke Kernscheibe (3) aus Polycarbonat und Außenscheiben (1, 2) aus thermisch vorgespanntem, 2 bis 3 mm dicken Silikatglas aufweist, die mit der Kernscheibe (3) aus Polycarbonat über jeweils eine 0,3 bis 1,0 mm dicke Schicht (4, 5) aus thermoplastischem Polyurethan verbunden sind, und daß die Silikatglasscheiben (1, 2) eine geringere Vorspannung als vorgespanntes Sicherheitsglas aufweisen, wobei die Zugspannungen im Kern der Glasscheiben 35 bis 55 N / mm² betragen.

4. Autoglasscheibe nach Anspruch 3, **dadurch gekennzeichnet**, daß die Vorspannung der Silikatglasscheiben über die Oberfläche der Scheiben unterschiedlich ist, wobei die mittlere Zugspannung im Kern der Glasscheiben in der Randzone umlaufend über den ganzen Umfang zwischen 40 und 55 N / mm² und im zentralen Bereich der Glasscheiben zwischen 35 bis 50 N / mm² beträgt.

5. Autoglasscheibe nach einem der Ansprüche 3 oder 4, **dadurch gekennzeichnet**, daß die Glasscheiben (1, 2) jede eine Dicke von 2 bis 2,5 mm, die Kernscheibe (3) aus Polycarbonat eine Dicke von etwa 1,0 mm, und die Verbindeschichten (4, 5) aus thermoplastischem Polyurethan jeweils eine Dicke von etwa 0,76 mm aufweisen.

6. Autoglasscheibe nach einem der vorstehenden Ansprüche 1 bis 5, **dadurch gekennzeichnet**, daß eine silanhaltige Haftvermittlerschicht (6, 7) auf die der Polyurethanschicht (4, 5) zugewandte Seite der Scheiben aus vorgespanntem Silikatglas aufgebracht ist.
